# EUROPÄISCHE PATENTSCHRIFT

(11) **EP 1 441 885 B1**
(45) Veröffentlichungstag und Bekanntmachung des Hinweises auf die Patenterteilung: **26.04.2006**
(21) Anmeldenummer: 02778974.2
(22) Anmeldetag: 15.10.2002
(51) Int. Cl.: B29B 9/16, B29B 13/02, C08G 63/80

(54) **VERFAHREN UND VORRICHTUNG ZUR ERHÖHUNG DER GRENZVISKOSITÄT VON POLYESTER**
METHOD AND DEVICE FOR INCREASING THE LIMITING VISCOSITY OF POLYESTER
PROCEDE ET DISPOSITIF POUR AUGMENTER LA VISCOSITE LIMITE DE POLYESTER

(30) Priorität: 29.10.2001 AT 170601
(43) Veröffentlichungstag der Anmeldung: 04.08.2004
(73) Patentinhaber: Fellinger, Markus, 4073 Wilhering (AT)
(72) Erfinder: Fellinger, Markus, 4073 Wilhering (AT)
(74) Vertreter: Margotti, Herwig Franz
(86) Internationale Anmeldenummer: PCT/AT2002/000294
(87) Internationale Veröffentlichungsnummer: WO 2003/037588

(56) Entgegenhaltungen:
- WO-A-00/46004
- DE-A- 1 905 677
- DE-A- 19 710 098
- US-A- 4 392 804

## Beschreibung

Die Erfindung betrifft ein Verfahren zur Erhöhung der Grenzviskosität von Polyester mittels Festphasenpolymerisation, wobei eine Polyester-Kunststoffschmelze in einer mit einer Flüssigkeit gefüllten Schneidkammer mittels eines in der Flüssigkeit rotierenden Messerrotors granuliert wird, und hierbei hergestelltes Granulat zur Festphasenpolymerisation in einen Wärmebehandlungsbehälter gefördert wird, sowie eine Vorrichtung zur Erhöhung der Grenzviskosität von Polyester mittels Festphasenpolymerisation gemäß dem Oberbegriff des Anspruchs 7.

Ein solches Verfahren und eine solche Vorrichtung sind am der DE-A-1 905 677 bekannt.

Hochmolekulare Polyester, wie beispielsweise PET und PEN, werden üblicherweise mittels Schmelzpolymerisation oder durch Festphasenpolymerisation oder einer Kombination aus beiden Vorgängen aus niedrig-molekularem Polyester-Ausgangsmaterial hergestellt. Mit Hilfe dieser Verfahren wird die relativ niedrige Grenzviskosität (IV - Intrinsic Viscosity) der Polyesterschmelze erhöht. Bei der Schmelzpolymerisation wird Polyesterschmelze bei Temperaturen um ca. 270°C bis 280°C für ca. 30 Minuten bis 5 Stunden unter starkem Vakuum von ca. 1mbar verarbeitet. Nachteilig ist hierbei, dass auf Grund der hohen Verarbeitungstemperaturen ein Abbauprozess des Polyesters stattfindet und es bei zu langen Verarbeitungszeiten über der Schmelzetemperatur zu einer Gelbfärbung des Polyesters kommt. Darüber hinaus sind die hiermit erreichbaren Grenzviskositätswerte begrenzt.

Bei der Festphasenpolymerisation wird die Polyesterschmelze üblicherweise durch mehrere Düsen extrudiert, und die dabei entstehenden Kunststoffstränge werden darauffolgend in einem Wasserbad abgekühlt. Nach der Erhärtung der Kunststoffstränge werden diese granuliert d.h. zu Granulat geschnitten. Das Polyestergranulat liegt somit in amorpher Form vor und wird einem sog. Kristallinisator zugeführt, in dem das Granulat unter starkem Rühren wieder auf eine Temperatur jenseits der Kristallinisationstemperatur (ca. 100°C-130°C) gebracht wird, um ein Zusammenkleben der Granulatkörner im Festphasenpolymerisations-Behälter zu verhindern. Das Granulat wird danach im Festphasenpolymerisationsbehälter zunächst auf ca. 220°C bis 250°C mittels eines Inertgasstromes oder unter Vakuum zwischen 0,5 und 2mbar mittels Heizelementen erwärmt und daraufhin für ca. 1-40 Stunden unter diesen Bedingungen belassen, bis die gewünschte Grenzviskosität erreicht ist.

Aus der DE 19 05 677 A ist eine Vorrichtung zur Erhöhung der Grenzviskosität von Polyester mittels Festphasenpolymerisation mit eine Unterwassergranulierung der Polyesterkunststoffschmelze bekannt, wobei eine Trennung von der Kühlflüssigkeit der Unterwassergranulierung erst in einer nachgeordneten zentrifugenartigen Trockenvorrichtung erfolgt. Die Trennung des Granulats von der Flüssigkeit in der Trockenvorrichtung wird hierbei mit Hilfe eines von einem Motor angetrieben Rührers erzielt. Nach der Trennung des Granulats von der Kühlflüssigkeit wird das Granulat zunächst in der Trockenvorrichtung getrocknet, darauffolgend in einem Wirbelschichtreaktor kristallisiert und abschließend in eine Vorrichtung zur Festphasenpolymerisation weitergeleitet.

In der WO 00/46004 A ist ein Verfahren bzw. eine Vorrichtung zur Erhöhung der Grenzviskosität geoffenbart, bei dem ein Kunststoffausgangsmaterial zunächst granuliert und dann vorkristallisiert wird, indem es in einem Wirbelschichtreaktor getrocknet wird, um eine Agglomeration des Granulats zu vermeiden. In einem weiteren Verfahrensschritt erfolgt ein Kristallisieren des Kunststoffmaterials, und anschließend wird das Granulat einer Festphasenpolymerisation unterzogen. Zudem ist eine Kühlvorrichtung zum Kühlen der Kunststoffstränge vorgesehen, bevor diese in einer Schneidvorrichtung granuliert werden. Zum Zurückhalten von Pellets-Agglomeraten, die von miteinander verklebten Pellets gebildet werden, ist eine Siebvorrichtung zum Aussieben der Agglomerate vorgesehen.

Aus der DE 197 10 098 A ist ein Verfahren zur Erzeugung von PET-Recyclat bekannt, bei dem zunächst Flakes unter Vakuum extrudiert und granuliert werden und anschließend eine Feststoff-Nachkondensation unter Vakuum erfolgt.

Aus der US 4 392 804 A ist ebenfalls ein Verfahren bekannt, bei welchem PET-Kunststoffmaterial zur Erhöhung der Grenzviskosität zunächst einer Festphasenpolymerisation unterzogen und anschließend in einem Extruder weiterverarbeitet wird.

Aus der US 5 391 694 A ist weiters ein Verfahren zur Festphasenpolymerisation bekannt, bei der eine verbesserte Reaktionszeit zur Erhöhung der Grenzviskosität des Granulats in einem Festphasenpolymerisationsbehälter mit Hilfe von Granulaten mit endseitig offenen Ausnehmungen erlangt werden soll.

Gemäß der US 4 755 587 A hingegen wird zur Herstellung von hochmolekularem Polyester das Granulat in porösen Pillen ausgeformt.

In der EP 0 856 537 A ist ein Verfahren zur Herstellung von Polyethylenterephthalat (PET) mit einer erhöhten, heterogenen Grenzviskosität beschrieben, wobei als Ausgangsstoff unterschiedliche PET-Materialien mit stark divergierenden Grenzviskositäten verwendet werden, die in einem zweistufigen FestphasenPolymerisations-Verfahren verarbeitet werden. Dabei werden zunächst die PET- und PVC-Materialien zu Plättchen (Teilchen) geschnitten bzw. gehackt und danach für ca. 3,5 Stunden auf 130°C erhitzt. Bei dieser Wärmebehandlung werden die PET-Teilchen lediglich getrocknet, die PVC-Teilchen hingegen bräunen, wonach die PVC-Teilchen mit Hilfe einer farbsensitiven Kamera ausgeschieden werden können. Danach werden die PET-Teilchen gesondert in einem Behälter in einer Stickstoffumgebung auf ca. 220°C erhitzt. Anschließend werden sie in einen Behälter für die zweite Stufe der Festphasen-Polymerisation geleitet, bei welcher sie für weitere 4 Stunden auf ca. 220°C erhitzt werden müssen. Somit ist bei diesem Verfahren eine mehrmalige energieintensive Wärmezufuhr erforderlich.

In der DE 40 32 510 A ist ein Verfahren zur kontinuierlichen Herstellung von Polyesterharz mit hohem Molekulargewicht beschrieben, wobei jedoch im Detail lediglich geoffenbart ist, wie eine Mischung von Pyromellitsäure-Dianhydrid in kristallisiertes PET-Pulver eingeleitet wird.

Aus der DE 43 09 227 A ist ein kontinuierliches Verfahren zur Herstellung von Polyester bekannt, bei dem das Polykondensat granuliert und das Granulat zunächst gehärtet sowie kristallisiert und erst darauf folgend in der Festphase polykondensiert wird. Zur Härtung wird das Granulat in einem Behälter in Luft, CO₂, N₂ oder anderen Gemischen, deren Taupunkt unter der Behandlungstemperatur liegt, so lange einer Temperatur im Bereich von 30°C ausgesetzt, bis die Temperatur der ersten Erweichung des Polyesters um 4°C bis 8°C gegenüber der ursprünglichen Temperatur angestiegen ist. Somit ist auch hier aufgrund der Kühlung zur Härtung des Granulats und der darauffolgenden Erwärmung ein hoher Energieverbrauch gegeben.

Die bekannten Festphasenpolymerisations-Verfahren weisen den Nachteil auf, dass für die Erwärmung des Granulats auf üblicherweise 200°C bis 250°C im Festphasenpolymerisations-Behälter aufwendige Heiz- und Mischeinrichtungen notwendig sind, abgesehen davon, dass auch ein sehr hoher Energieverbrauch gegeben ist.

Aufgabe der Erfindung ist es daher, ein Verfahren und eine Vorrichtung der eingangs angeführten Art zu schaffen, durch welche der Energieverbrauch möglichst gering gehalten wird und zudem aufwendige Heizeinrichtungen im Festphasenpolymerisations-Behälter entfallen können.

Dies wird bei einem Verfahren der eingangs angeführten Art dadurch erreicht, dass das Granulat unmittelbar nach der Herstellung in der Schneidkammer beim Verlassen der Schneidkammer von der Flüssigkeit abgesiebt wird, so dass das Granulat nur geringfügig unter der Schmelzetemperatur abgekühlt wird, und direkt nach der Granulierung zur Ausnutzung der Restwärme im Granulat in den Festphasenpolymerisations-Wärmebehandlungsbehälter geleitet wird.

Um das Kunststoffmaterial während der Granulierung möglichst warm zu halten und somit den für die nachfolgende Erwärmung im Wärmebehandlungsbehälter erforderlichen Energieverbrauch möglichst gering zu halten, wird beim vorliegenden Verfahren das Granulat durch das Absieben des Granulats von der Flüssigkeit unmittelbar nach dessen Herstellung beim Verlassen des Schneidkammer lediglich geringfügig unter der Schmelzetemperatur hergestellt, wobei sich eine auskristallisierte Außenschicht bzw. -haut bildet, während im Inneren das Kunststoffmaterial noch zähflüssig ist. Mit Hilfe der direkten, unmittelbaren Förderung des Granulats nach dessen Herstellung in einen benachbarten Wärmebehandlungsbehälter kann die im Granulat gespeicherte Restwärme genutzt werden, wodurch der zur Festphasenpolymerisation erforderliche Energieverbrauch reduziert werden kann. Darüber hinaus erübrigen sich auch aufwendige Heiztechniken.

Die mittels Einschnecken-, Doppelschnecken- oder Mehrschneckenextrudern hergestellte Polyester-Schmelze neigt beim Schmelzen des Granulats zum sog. hydrologischen Abbau, wodurch die in der Schmelze vorhandenen Wassermoleküle zu einem Viskositätsverlust des Polyesters führen. Um diesem Viskositätsverlust entgegenzuwirken, ist es günstig, wenn das Polyester-Ausgangsmaterial vor der Granulierung getrocknet wird.

Ebenfalls ist es für eine schonende Aufbereitung des Polyester-Ausgangsmaterials vorteilhaft, wenn die Polyester-Kunststoffschmelze vor der Granulierung mit einem Unterdruck, vorzugsweise zwischen 1 und 40 mbar, evakuiert wird, da somit der Abbau der Grenzviskosität bei der Extrusion des Polyester-Ausgangsmaterials möglichst gering gehalten werden kann.

Wenn eine Messung der Schmelzeviskosität im Extruder oder am Austritt aus dem Wärmebehandlungsbehälter erfolgt, ist es in vorteilhafter Weise möglich, die Verweilzeit im Wärmebehandlungsbehälter, und somit den IV-Wert, in Abhängigkeit von der Grenzviskosität des Polyester vor der Granulierung bzw. nach der Wärmebehandlung zu regeln.

Tests haben ergeben, dass besonders hohe Grenzviskositäten bei relativ geringer Verweilzeit im Wärmebehandlungsbehälter erlangt werden, wenn im Wärmebehandlungsbehälter ein Unterdruck von vorzugsweise im Wesentlichen 1 bis 3 mbar herbeigeführt wird.

Um nach Möglichkeit die Temperatur des Granulats nach dem Austritt aus der Granuliervorrichtung möglichst hoch zu halten ist es von Vorteil, wenn das Granulat während der Zuleitung in den Wärmebehandlungsbehälter erwärmt wird.

Die gestellte Aufgabe wird ferner durch eine Vorrichtung gemäß Anspruch 7 gelöst.

Durch die direkt an die Schneidkammer angrenzende Siebvorrichtung sowie die direkte Verbindung der Granuliereinheit mit der Wärmebehandlungseinheit über eine Fördereinrichtung kann das noch nicht weit unter seine Schmelzetemperatur abgekühlte Granulat direkt nach seiner Herstellung unter Ausnutzung der im Granulat gespeicherten Restwärme in einen Wärmebehandlungsbehälter gefördert werden. Da keine wesentliche Erwärmung des ohnedies noch warmen Granulats erforderlich ist, kann der Wärmebehandlungsbehälter einen im Vergleich zum Stand der Technik konstruktiv einfachen Aufbau aufweisen, wobei ein wärmeisolierter bzw. mit einer einfachen Wandheizung ausgestatteter Behälter ausreichend ist. Hierdurch wird eine konstruktiv einfache und zudem Energie-sparende Vorrichtung zur Erhöhung der Grenzviskosität. von Polyester geschaffen.

Um insbesondere bei einer diskontinuierlichen Beschickung des Behälters mit Granulat ein möglichst gleichmäßiges Mischgut zu erhalten, ist es von Vorteil, wenn zumindest ein Mischelement im Behälter vorgesehen ist, wobei dies nach Möglichkeit das Granulat im gesamten Behälter durchmischen soll. Selbstverständlich können hierbei beliebige Mischelemente, wie beispielsweise Rührelemente, aber auch sog. Taumeltrockner, eingesetzt werden. Um insbesondere bei einer kontinuierlichen Beschickung des Behälters das eingebrachte Granulat auch im Inneren des Behälters zu erwärmen, ist es von Vorteil, wenn das Mischelement beheizbar ist.

Wenn der Wärmebehandlungsbehälter mit einem Inertgas, z.B. Stickstoff, gefüllt ist, läuft das Verfahren vorteilhafterweise praktisch störungsfrei ab, und zudem kann das Inertgas zugleich als Wärmeträgermedium verwendet werden.

Um das Granulat bei möglichst hohen Temperaturen knapp unterhalb der Schmelzetemperatur herzustellen, ist es von Vorteil, wenn die in der Schneidkammer vorgesehene Flüssigkeit einen höheren Siedepunkt als Wasser bei Umgebungsdruck aufweist, wobei dies beispielsweise auf einfache Weise ermöglicht wird, wenn die Flüssigkeit ein Wasser/Glykol-Gemisch ist.

Um die Siedetemperatur des in die Schneidkammer eingebrachten Kühlmediums zu erhöhen und somit das Granulat bei einer vergleichsweise hohen Temperatur herstellen zu können, ist es günstig, wenn die Schneidkammer eine Druckkammer ist.

Um nach Möglichkeit ein Abkühlen des Granulats während der Beförderung von der Granuliereinheit zu der Wärmebehandlungseineinheit zu vermeiden ist es vorteilhaft, wenn die Fördereinrichtung wärmeisoliert ist. Zudem ist es auch möglich, dass die Fördereinrichtung beheizbar ist, um das Granulat bei möglichst hoher Temperatur in die Wärmebehandlungseinheit einzubringen.

Wenn in Förderrichtung gesehen vor der Granuliereinheit, gegebenenfalls vor einem vorgeschalteten Extruder, eine Vortrocknungseinheit, vorzugsweise ein Vakuumtrockner, Heißlufttrockner oder dergl., angeordnet ist, kann die Zahl der in der Schmelze vorhandenen Wassermoleküle, die auf Grund des sog. hydrologischen Abbaus zu einem Viskositätsverlust des Polyesters führen, verringert werden.

Um das Polyester-Ausgangsmaterial möglichst schonend aufzubereiten und den Abbau der Grenzviskosität bei der Extrusion des Polyester-Ausgangsmaterials möglichst gering zu halten, ist es günstig, wenn ein vor der Granuliereinheit angeordneter Extruder zumindest eine Entgasungszone aufweist, an den ein Vakuum bzw. Unterdruck von vorzugsweise zwischen 1 und 40mbar angelegt ist.

Die Erfindung wird nachstehend anhand von in der Zeichnung dargestellten bevorzugten Ausführungsbeispielen, auf die sie jedoch nicht beschränkt sein soll, noch weiter erläutert. Im Einzelnen zeigen in der Zeichnung:
Fig.1 eine schematische Ansicht einer Vorrichtung zur Erhöhung der Grenzviskosität mittels Festphasenpolymerisation;
Fig.2 eine schematische Ansicht einer Vorrichtung ähnlich Fig.1, jedoch mit zwei Wärmebehandlungsbehältern;
Fig.3 eine schematische Ansicht ähnlich den Fig.1 und 2, jedoch mit einem unter Druck stehenden Kühlmedium; und
Fig.4 eine schematische Ansicht einer Vorrichtung zur Erhöhung der Grenzviskosität von Polymeren mit einem Fördergebläse.

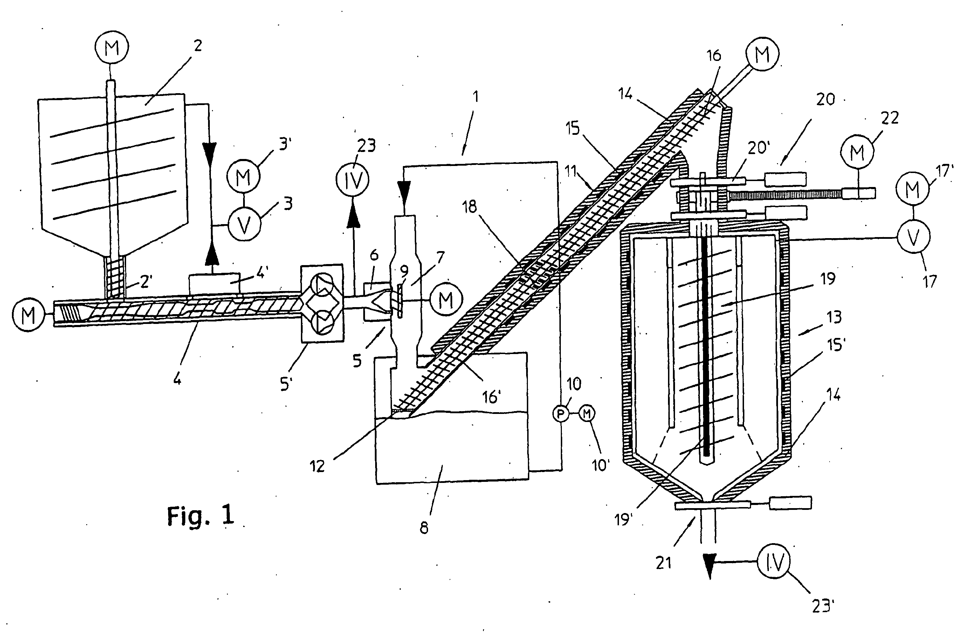

In Fig.1 ist eine Vorrichtung bzw. ein Verfahren zur Erhöhung der Grenzviskosität von Polyester gezeigt, bei welcher von einem Vortrocknungsbehälter 2 über eine Stopfenschnecke 2' Polyester-Ausgangsmaterial in einen Extruder 4 eingebracht wird. An den Vortrocknungsbehälter 2 sowie an eine Entgasungsanlage 4' des Extruders 4 ist eine Vakuum-Anlage 3 angeschlossen, die von einem Motor 3' angetrieben wird, um den Wassergehalt im Polyester-Ausgangsmaterial zu reduzieren bzw. zugleich der Schmelze Wasserdampf und Monomere zu entziehen.

Anschließend wird das Polyester-Ausgangsmaterial, nachdem es in einer Filtervorrichtung 5' gereinigt wurde, mit Hilfe einer Unterwasser-Granuliervorrichtung 5 geschnitten. Hierbei werden die aus einem Granulierkopf 6 austretenden Kunststoffstränge in einer Schneidkammer 7 mit Hilfe eines Kühlmediums 8 lediglich geringfügig unter ihre Schmelzetemperatur gekühlt, während sie von Schneidmessern 9 in Partikel zerschnitten werden. Das Kühlmedium 8 wird über eine von einem Motor 10' angetriebene Pumpe 10 in die Schneidkammer 7 gefördert. Als Kühlmedium 8 kann beispielsweise Wasser oder ein Wasser-Glykol-Gemisch vorgesehen sein. Die bloß an der Oberfläche gekühlten Kunststoffstränge werden sogleich mit Hilfe der Schneidmesser 9 geschnitten, und das so erhaltene Granulat wird unmittelbar nach seiner Herstellung in Richtung einer Förderschnecke 11 geleitet, wobei das Granulat unmittelbar nach der Kühlung mittels eines Siebes 12 vom Kühlwasser 8 getrennt wird, wodurch das Granulat nur geringfügig unter seine Schmelzetemperatur abgekühlt wird.

Über die Förderschnecke 11 wird das Granulat sodann zu einem Wärmebehandlungsbehälter 13, auch SSP (Solid State Polymerisation)-Reaktor genannt, geleitet. Die Förderschnecke 11 weist eine Isolierung 14 und Heizelemente 15 auf, um das Granulat bei möglichst hoher Temperatur - jedoch unter der Schmelzetemperatur - in den Wärmebehandlungsbehälter 13 einzubringen. Zudem sind an einem die Schnecke 16 umgebenden Rohr 16' nach innen abstehende Mischelemente 18 in einem Teilbereich angeordnet, um das Granulat durchzumischen und ein Zusammenkleben der Granulat-Körner zu verhindern.

Das somit noch eine beträchtliche Restwärme aufweisende Granulat wird danach in den Wärmebehandlungsbehälter 13 geleitet, der über eine vakuumdichte Schleuse 20 mit Schieber 20' zu der Förderschnecke 11 verschlossen werden kann. Der Wärmebehandlungsbehälter 13 weist lediglich eine isolierte Außenwand 14' auf, in der Heizelemente 15' vorgesehen sind. Die erforderliche Energiezufuhr für die Festphasenpolymerisation ist auf Grund der im Granulat noch vorhandenen Restwärme gegenüber bekannten SSP-Reaktoren wesentlich geringer. Darüber hinaus ist zur Erzeugung eines Vakuums von ca. 1-3 mbar im Wärmebehandlungsbehälter 13 eine Vakuumpumpe 17 vorgesehen, die von einem Motor 17' angetrieben wird.

Die Beschickung und die Entnahme aus dem Wärmebehandlungsbehälter 13 kann entweder kontinuierlich oder diskontinuierlich erfolgen. Bei einer diskontinuierlichen Beschickung ist es günstig, wenn wie in Fig.1 gezeigt der Wärmebehandlungsbehälter 13 ein Mischelement 19 zum Durchmischen des Granulats im Wärmebehandlungsbehälter 13 aufweist, und somit beim Austrag ein gleichmäßiges Mischgut erhalten wird. Das Mischelement 19 weist bei dem in Fig.1 gezeigten Ausführungsbeispiel zusätzlich ein in Achsrichtung vorgesehenes Heizelement 19' auf. Zum Antrieb des Mischelements 19 ist ein Motor 22 vorgesehen.

Zum Erzielen eines möglichst gleichmäßigen Granulats kann die Grenzviskosität entweder mit Hilfe eines sog. Inline-Viskosimeters 23 nach dem Austritt aus dem Extruder 4 oder mit Hilfe eines Viskosimeters 23' nach dem Austritt über die Schleuse 21 aus dem Wärmebehandlungsbehälter 13 gemessen werden. Über diese Viskositätsmessungen können die Verfahrensparameter (Temperatur und Verweilzeit im Wärmebehandlungsbehälter 13 sowie die Trocknungszeit im Vortrocknungsbehälter 2) geregelt werden. Des Weiteren kann in Abhängigkeit von der gemessenen Viskosität die Vakuum-Anlage 3 zur Trocknung des Polyester-Ausgangsmaterials bzw. zur Zylinderentgasung geregelt werden.

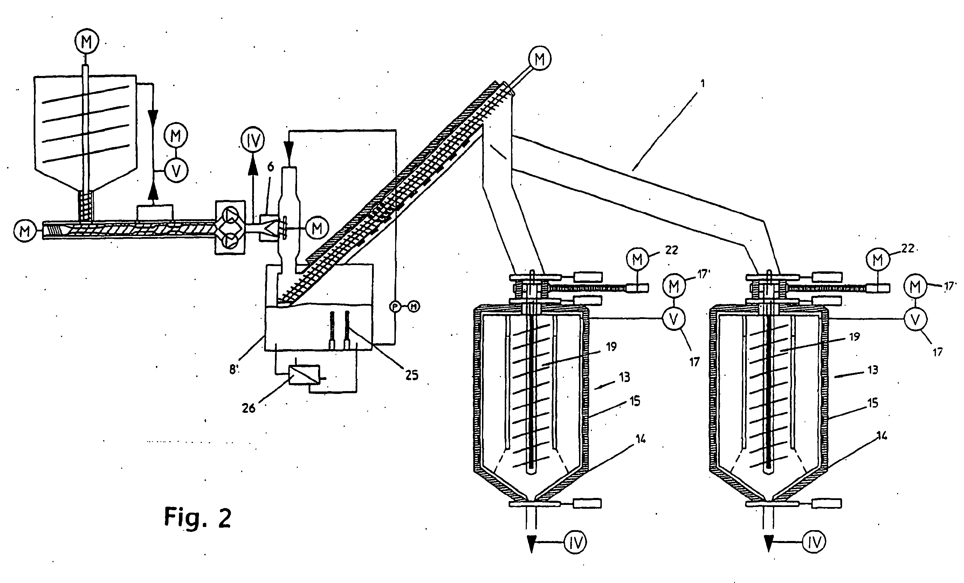

In Fig.2 ist eine vergleichbare Vorrichtung 1 gezeigt, wobei jedoch zwei Wärmebehandlungsbehälter 13 vorgesehen sind, die bei einer diskontinuierlichen Beschickung abwechselnd mit Granulat beschickt werden können. Zudem ist in dem Kühlmedium-Speicherbehälter 8' eine Heizvorrichtung 25 sowie ein Wärmetauscher 26 gezeigt, über welche die Temperatur des für die Kühlung der aus dem Granulierkopf 6 austretenden Kunststoffstränge vorgesehenen Kühlmediums reguliert werden kann. Im Übrigen entspricht die Vorrichtung von Fig.2 jener von Fig.1, so dass sich eine Wiederholung der Beschreibung erübrigen kann.

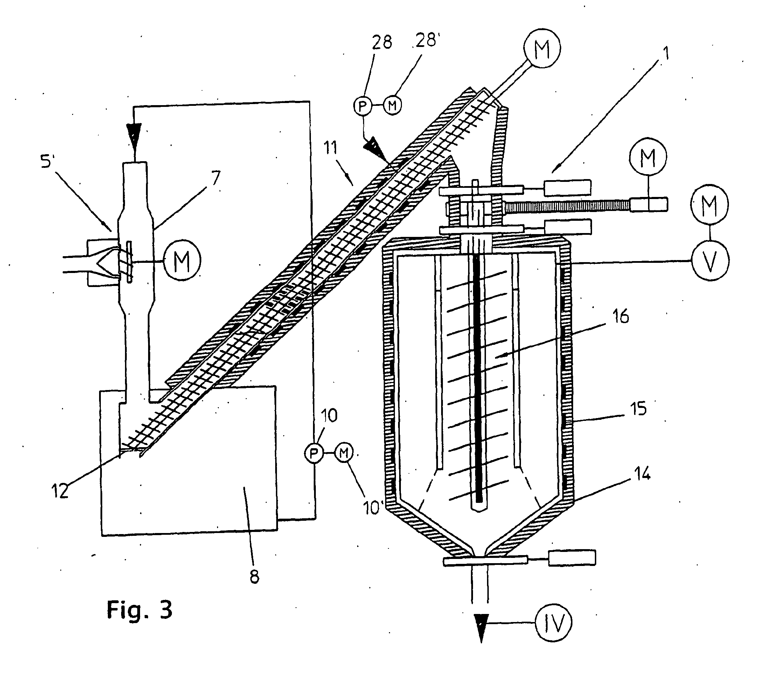

In Fig.3 ist eine Unterwasser-Granulieranlage 5' gezeigt, bei welcher das Kühlmedium 8 mit Hilfe der Pumpe 10 mit ca. 6 bar in eine druckfeste Schneidkammer 7 gefördert wird. Hierdurch kann die Siedetemperatur des Kühlmediums 8 erhöht werden, und somit können die Granulate mit einer höheren Temperatur hergestellt werden. Zum zuverlässigen Transport in der Förderschnecke 11 wird diese im Falle einer druckdichten Schneidkammer 7 mit einem Druck, z.B. ca. 5 bar, beaufschlagt, wobei hierzu eine von einem Motor 28' angetriebene Pumpe bzw. ein Kompressor 28 vorgesehen ist.

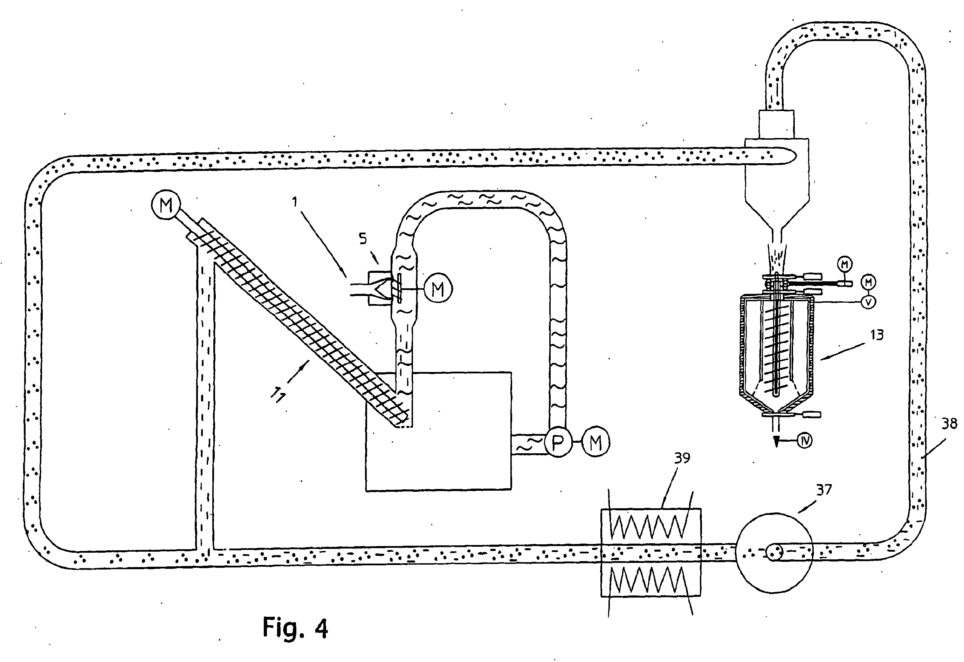

Wie aus Fig.4 ersichtlich, kann zur Förderung des Granulats von der Granuliervorrichtung 5 zu dem Wärmebehandlungsbehälter 13 zusätzlich zu der Förderschnecke 11 auch ein Fördergebläse 37 vorgesehen sein, um das Granulat über eine Rohrleitung 38 zum Wärmebehandlungsbehälter 13 zu transportieren. Zur Erwärmung der Förderluft ist hierzu eine Heizvorrichtung 39 vorgesehen.

Selbstverständlich sind auch noch weitere Möglichkeiten zur Förderung von der Granuliereinrichtung zum Wärmebehandlungsbehälter 13 sowie zur Granulierung denkbar, wobei lediglich wesentlich ist, dass das Granulat geringfügig unter der Schmelzetemperatur erzeugt und unter Ausnutzung der Restwärme direkt in den Wärmebehandlungsbehälter geleitet wird.

Bei einem Versuchsbeispiel wurde unter Verwendung einer erfindungsgemäßen Vorrichtung zur Erhöhung der Grenzviskosität von Polyester das Granulat vom Kühlwasser 8 mittels dem Sieb 12 getrennt und über eine 2 Meter lange Förderschnecke 11 mit Mischelementen 18 in einen über die vakuumdichte Schleuse 20 verschlossenen Wärmebehandlungsbehälter 13 zugeführt. Der Wärmebehandlungsbehälter 13 wies lediglich eine Wärmeisolierung 14' auf. Der Wärmebehandlungsbehälter 13 wurde mit ca. 200kg Granulat unter einem kontinuierlich anliegenden Vakuum von 1-3 mbar gefüllt. Anschließend wurde die Temperatur des Granulats im Wärmebehandlungsbehälter 13 gemessen, wobei sich im Behälter 13 eine Granulattemperatur von 212°C einstellte.

Das Granulat wurde 6 Stunden lang im Wärmebehandlungsbehälter 13 bei einem Vakuum von 1-2 mbar belassen. Nach ca. 6 Stunden betrug die Temperatur des Granulats im Wärmebehandlungsbehälter 13 185°C. Das ausgetragene Granulat wurde anschließend mittels Umgebungsluft gekühlt. Eine Messung der Grenzviskosität ergab einen durchschnittlichen IV-Wert von 0,72-0,75d1/g.

Zum Vergleich wurde unter Verwendung einer Festphasenpolymerisations-Vorrichtung gemäß Stand der Technik das Granulat vom Wasser getrennt und anschließend in einer Zentrifuge getrocknet. Die Kühlwassertemperatur betrug hierbei 90°C bei einer Durchflussgeschwindigkeit von ca. 15m³/h. In einem Auffangbehälter für die Granulate wurde eine Temperatur von 40°C-70°C gemessen. Der IV-Wert der Granulate betrug 0,63-0,65 dl/g und liegt somit um ca. 0,1 dl/g unter jenem Wert der mit der erfindungsgemäßen Vorrichtung erzielt wurde.

Bei beiden Versuchen wurde PET-Flaschenmahlgut mit einer Restfeuchte von kleiner als 0,5% und einem PVC-Anteil von kleiner als 10 ppm mit annähernd gleichen Grenzviskositäten IV von 0,71-0,74 dl/g verwendet. Bei der Entgasung am Extruder wurde ein Vakuum mit ca. 40 mbar Unterdruck mittels einer Wasserringvakuumpumpe angelegt, da ein stärkeres Vakuum die Abbauwerte am Extruder weiter reduzieren würde. Die Durchsatzleistung des Extruders betrug bei 125 Schneckenumdrehungen pro Minute ca. 220 bis 240 kg/h. Das Polyester-Ausgangsmaterial wurde bei ca. 270°C verarbeitet und danach mittels einer handelsüblichen Unterwassergranulierung zu Granulat mit einem Partikel-Durchmesser zwischen 3-3,5mm geschnitten.

Hieraus ergibt sich, dass mit Hilfe der erfindungsgemäßen Vorrichtung bzw. des erfindungsgemäßen Verfahrens im Vergleich zu bekannten Vorrichtungen bzw. Verfahren Polyester mit einer durchschnittlich höheren Grenzviskosität bei wesentlich geringerem Energieverbrauch hergestellt werden kann.

## Patentansprüche

1. Verfahren zur Erhöhung der Grenzviskosität von Polyester mittels Festphasenpolymerisation, wobei eine Polyester-Kunststoffschmelze in einer mit einer Flüssigkeit (8) gefüllten Schneidkammer (7) mittels eines in der Flüssigkeit (8) rotierenden Messerrotors (9) granuliert wird, und hierbei hergestelltes Granulat zur Festphasenpolymerisation in einen Wärmebehandlungsbehälter (13) gefördert wird, **dadurch gekennzeichnet, dass** das Granulat unmittelbar nach der Herstellung in der Schneidkammer beim Verlassen der Schneidkammer von der Flüssigkeit abgesiebt wird, so dass das Granulat nur geringfügig unter der Schmelzetemperatur abgekühlt wird, und direkt nach der Granulierung zur Ausnutzung der Restwärme im Granulat in den Festphasenpolymerisations-Wärmebehandlungsbehälter (13) geleitet wird.

2. Verfahren nach Anspruch 1, **dadurch gekennzeichnet, dass** das Polyester-Ausgangsmaterial vor der Granulierung getrocknet wird.

3. Verfahren nach Anspruch 1 oder 2, **dadurch gekennzeichnet, dass** die Polyester-Kunststoffschmelze vor der Granulierung mit einem Unterdruck, vorzugsweise zwischen 1 und 40 mbar, evakuiert wird.

4. Verfahren nach einem der Ansprüche 1 bis 3, **dadurch gekennzeichnet, dass** die Verweilzeit im Wärmebehandlungsbehälter (13) in Abhängigkeit von der Grenzviskosität des Polyester vor der Granulierung bzw. nach der Wärmebehandlung geregelt wird.

5. Verfahren nach einem der Ansprüche 1 bis 4, **dadurch gekennzeichnet, dass** im Wärmebehändlungsbehälter (13) ein Unterdruck von vorzugsweise im Wesentlichen 0,1 bis 3 mbar herbeigeführt wird.

6. Verfahren nach einem der Ansprüche 1 bis 5, **dadurch gekennzeichnet, dass** das Granulat während der Zuleitung in den Wärmebehandlungsbehälter (13) erwärmt wird.

7. Vorrichtung zur Erhöhung der Grenzviskosität von Polyester mittels Festphasenpolymerisation mit einer Granuliereinheit, einer einem Festphasenpolymerisations-Wärmebehandlungsbehälter (13) aufweisenden Warmebehandlungseinheit, sowie einer Fördereinheit zur Förderung des Granulats in den Festphasenpolymerisations-Wärmebehandlungsbehälter (13) wobei die Granuliereinheit (5) eine mit Flüssigkeit (8) gefüllte Schneidkammer (7) aufweist, **dadurch gekennzeichnet, dass** direkt an die Schneidkammer (7) angrenzend eine Siebvorrichtung (12) vorgesehen ist, und zur direkten Förderung des Granulats der unbeheizte und wärmeisolierte oder eine Wandheizung (15) aufweisende Festphasenpolymerisations-Wärmebehandlungsbehälter (13) über die Fördereinrichtung (11) an die Granuliereinheit (5) angeschlossen ist.

8. Vorrichtung nach Anspruch 7, **dadurch gekennzeichnet, dass** zumindest ein Mischelement (19) im Behälter (13) vorgesehen ist.

9. Vorrichtung nach Anspruch 8, **dadurch gekennzeichnet, dass** das Mischelement (19) beheizbar ist.

10. Vorrichtung nach einem der Ansprüche 7 bis 9, **dadurch gekennzeichnet, dass** der Wärmebehandlungsbehälter mit einem Inertgas gefüllt ist.

11. Vorrichtung nach einem der Ansprüche 7 bis 10, **dadurch gekennzeichnet, dass** die in der Schneidkammer (7) vorgesehene Flüssigkeit (8) einen höheren Siedepunkt als Wasser bei Umgebungsdruck aufweist.

12. Vorrichtung nach Anspruch 11, **dadurch gekennzeichnet, dass** die Flüssigkeit (8) ein Wasser/Glykol-Gemisch ist.

13. Vorrichtung nach einem der Ansprüche 7 bis 12, **dadurch gekennzeichnet, dass** die Schneidkammer (7) eine Druckkammer ist.

14. Vorrichtung nach einem der Ansprüche 7 bis 13, **dadurch gekennzeichnet, dass** die Fördereinrichtung (11) wärmeisoliert ist.

15. Vorrichtung nach einem der Ansprüche 7 bis 14, **dadurch gekennzeichnet, dass** die Fördereinrichtung (11) beheizbar ist.

16. Vorrichtung nach einem der Ansprüche 7 bis 15, **dadurch gekennzeichnet, dass** in Förderrichtung gesehen vor der Granuliereinheit (5) eine Vortrocknungseinheit, vorzugsweise ein Vakuumtrockner, Heißlufttrockner oder dergl., angeordnet ist.

17. Vorrichtung nach einem der Ansprüche 7 bis 16, **dadurch gekennzeichnet, dass** ein vor der Granuliereinheit (5) angeordneter Extruder (4) zumindest eine Entgasungszone aufweist, an den ein Vakuum von vorzugsweise zwischen 1 und 40 mbar angelegt ist.

## Claims

1. A method of increasing the intrinsic viscosity of polyester by means of solid state polymerization, wherein a polyester plastics melt is granulated in a liquid (8)-filled cutting chamber (7) by means of a cutter rotor (9) rotating in the liquid (8), and granules produced thereby are conveyed into a thermal treatment container (13) for solid state polymerization, **characterized in that** immediately after their production in the cutting chamber the granules, when leaving the cutting chamber, are screened from the liquid so that the granules are cooled to only slightly below their melting temperature and fed into the solid state polymerization-thermal treatment container (13) immediately after the granulation so as to utilize the residual heat in the granules.

2. A method according to claim 1, **characterized in that** the polyester starting material is dried prior to granulation.

3. A method according to claim 1 or 2, **characterized in that** the polyester plastics melt is evacuated prior to granulation with a negative pressure, preferably between 1 and 40 mbar.

4. A method according to any of claims 1 to 3, **characterized in that** the dwell time in the thermal treatment container (13) is controlled in dependence on the intrinsic viscosity of the polyester prior to granulation, or after the thermal treatment, respectively.

5. A method according to any of claims 1 to 4, **characterized in that** a negative pressure of preferably substantially from 0.1 to 3 mbar is caused in the thermal treatment container (13).

6. A method according to any of claims 1 to 5, **characterized in that** the granules are heated while they are being fed into the thermal treatment container (13).

7. An arrangement for increasing the intrinsic viscosity of polyester by means of solid state polymerization with a granulating unit, a thermal treatment unit having a solid state polymerization-thermal treatment container (13) as well as a conveying unit for conveying the granules into the solid state polymerization-thermal treatment container (13), wherein the granulating unit (5) comprises a liquid (8)-filled cutting chamber (7), **characterized in that** a screening device (12) is provided immediately adjacent the cutter chamber (7) and that the unheated and thermally insulated solid state polymerization-thermal treatment container (13) or the solid state polymerization-thermal treatment container (13) having wall heating means (15) is connected to the granulating unit (5) via the conveying device (11) for a direct conveyance of the granules.

8. An arrangement according to claim 7, **characterized in that** at least one mixing element (19) is provided in the container (13).

9. An arrangement according to claim 8, **characterized in that** the mixing element (19) is heatable.

10. An arrangement according to any of claims 7 to 9, **characterized in that** the thermal treatment container is filled with an inert gas.

11. An arrangement according to any of claims 7 to 10, **characterized in that** the liquid (8) provided in the cutting chamber (7) has a higher boiling point than water at ambient pressure.

12. An arrangement according to claim 11, **characterized in that** the liquid (8) is a water/glycol mixture.

13. An arrangement according to any of claims 7 to 12, **characterized in that** the cutting chamber (7) is a pressure chamber.

14. An arrangement according to any of claims 7 to 13, **characterized in that** the conveying device (11) is thermally insulated.

15. An arrangement according to any of claims 7 to 14, **characterized in that** the conveying device (11) is heatable.

16. An arrangement according to any of claims 7 to 15, **characterized in that** a pre-drying unit, preferably a vacuum drier, hot air drier or the like, is arranged upstream of the granulating unit (5), viewed in the conveying direction.

17. An arrangement according to any of claims 7 to 16, **characterized in that** an extruder (4) arranged upstream of the granulating unit (5) comprises at least one degassing zone, to which a vacuum of preferably between 1 and 40 mbar is applied.

## Revendications

1. Procédé pour augmenter le seuil de viscosité de polyester par polymérisation en phase solide, une matière plastique de polyester en fusion étant grenaillée dans un chambre de chambre de coupe (7) au moyen d'un rotor à lames (9) en rotation dans un liquide (8) et les granulés fabriqués à cet effet étant transportés dans un réservoir de traitement thermique (13) pour la polymérisation en phase solide, **caractérisé en ce que** les granulés sont tamisés hors du liquide, directement après la fabrication dans la chambre de coupe, à la sortie de la chambre de coupe, pour que les granulés ne soient refroidis qu'à une température faiblement inférieure à la température de fusion et **en ce qu'**ils sont dirigés dans le réservoir de traitement thermique pour la polymérisation en phase solide (13) directement après la granulation, pour exploiter la chaleur résiduelle dans les granulés.

2. Procédé selon la revendication 1, **caractérisé en ce qu'**on sèche le produit polyester de départ avant la granulation.

3. Procédé selon la revendication 1 ou 2, **caractérisé en qu'**on évacue la matière plastique polyester en fusion avant la granulation, sous une dépression comprise de préférence entre 1 et 40 mbar.

4. Procédé selon l'une quelconque des revendications 1 à 3, **caractérisé en ce qu'**on règle le temps de séjour dans le réservoir de traitement thermique (13) en fonction de la viscosité limite du polyester avant la granulation ou après le traitement thermique.

5. Procédé selon l'une quelconque des revendications 1 à 4, **caractérisé en ce qu'**on place le réservoir de traitement thermique (13) sous une dépression, sensiblement de 0,1 à 3 mbar.

6. Procédé selon l'une quelconque des revendications 1 à 5, **caractérisé en ce qu'**on réchauffe les granulés pendant leur alimentation dans le réservoir de traitement thermique (13).

7. Dispositif pour augmenter la viscosité limite de polyester par polymérisation en phase solide, avec une unité de granulation (5) une unité de traitement thermique comportant un réservoir de traitement thermique pour polymérisation en phase solide, ainsi qu'un dispositif de transport pour le transport des granulés dans le réservoir de traitement thermique pour polymérisation en phase solide, l'unité de granulation (7) comportant une chambre de coupe (7) remplie d'un liquide (8), **caractérisé en ce qu'**on a prévu un dispositif de tamisage (12) directement adjacent à la chambre de coupe (7) et **en ce que** pour le transport direct des granulés, le réservoir de traitement thermique pour la polymérisation en phase solide (13) non chauffé et thermiquement isolé ou comportant un chauffage mural (15) est raccordé à l'unité de granulation (5) par l'intermédiaire du dispositif de transport (11).

8. Dispositif selon la revendication 7, **caractérisé en ce qu'**on a prévu au moins un élément mélangeur (19) dans le réservoir (13).

9. Dispositif selon la revendication 8, **caractérisé en ce que** les éléments mélangeurs (19) peuvent être chauffés.

10. Dispositif selon l'une quelconque revendication 7 à 9, **caractérisé en ce que** le réservoir de traitement thermique est rempli d'un gaz inerte.

11. Dispositif selon l'une quelconque des revendications 7 à 10, **caractérisé en ce que** le liquide (8) prévu dans la chambre de coupe (7) présente un point d'ébullition supérieur à l'eau à température ambiante.

12. Dispositif selon la revendication 11, **caractérisé en ce que** le liquide (8) est un mélange eau/glycole.

13. Dispositif selon l'une quelconque des revendications 7 à 12 **caractérisés en ce que** la chambre de coupe (7) est une chambre sous pression.

14. Dispositif selon l'une quelconque des revendications 7 à 13, **caractérisé en ce que** le dispositif de transport (11) est thermiquement isolé.

15. Dispositif selon l'une quelconque des revendications 7 à 14, **caractérisé en ce que** le dispositif de transport (11) peut être chauffé.

16. Dispositif selon l'une quelconque des revendications 7 à 15, **caractérisé en ce que** vue dans le sens de transport une unité de préséchage, de préférence un sécheur à vide, un sécheur à air chaud ou similaire est disposée à l'avant de l'unité de granulation (5).

17. Dispositif selon l'une quelconque des revendications 7 à 16, **caractérisé en ce qu'**une extrudeuse (4) disposée à l'avant de l'unité de granulation (5) comporte au moins une zone de dégazage, sur laquelle est appliqué une vide compris de préférence entre 1 et 40 mbar.
